# EUROPÄISCHE PATENTSCHRIFT

(11) **EP 2 681 427 B1**
(45) Veröffentlichungstag und Bekanntmachung des Hinweises auf die Patenterteilung: **26.10.2016**
(21) Anmeldenummer: 12700110.5
(22) Anmeldetag: 09.01.2012
(51) Int. Cl.: F02B 37/24, F02B 37/18

(54) **VERFAHREN ZUM JUSTIEREN EINER DRUCKDOSE/UNTERDRUCKDOSE**
METHOD FOR ADJUSTING A PNEUMATIC ACTUATOR
PROCÉDÉ D'AJUSTEMENT D'UN ACTIONNEUR PNEUMATIQUE

(30) Priorität: 01.03.2011 DE 102011004917
(43) Veröffentlichungstag der Anmeldung: 08.01.2014
(73) Patentinhaber: Bosch Mahle Turbo Systems GmbH & Co. KG, 70376 Stuttgart (DE)
(72) Erfinder: SCHÄFLEIN, Jochen, 70376 Stuttgart (DE); GAIL, Andreas, 87544 Blaichach (DE); ROTHE, Christian, 87527 Sonthofen (DE); LANDERER, Stefan, 87527 Sonthofen (DE); MARTENS, Anatolij, 73054 Eislingen (DE); LAUBENDER, Jochen, 71706 Markgröningen (DE); BEDÖ, Stefan, 70182 Stuttgart (DE); PESCHKE, Christian, 70437 Stuttgart (DE); KRETH, Jens, 71739 Oberriexingen (DE); KRAUSE, Alina, 70190 Stuttgart (DE)
(74) Vertreter: BRP Renaud & Partner mbB Rechtsanwälte Patentanwälte Steuerberater
(86) Internationale Anmeldenummer: PCT/EP2012/050237
(87) Internationale Veröffentlichungsnummer: WO 2012/116852

(56) Entgegenhaltungen:
- US-A- 5 746 058
- US-A1- 2005 050 888
- US-A1- 2007 051 106
- US-B2- 7 340 895

## Beschreibung

Die vorliegende Erfindung betrifft ein Verfahren zum Justieren einer Druckdose/Unterdruckdose an einer Ladeeinrichtung.

Üblicherweise sind Abgasturbolader mit Stelleinrichtungen, bspw. pneumatischen Stellern, ausgerüstet, welche eine Regeleinrichtung, bspw. eine variable Turbinengeometrie oder ein Waste-Gate-Ventil betätigen. Die Stelleinrichtung wird dabei über die Motorsteuerung angesteuert und bewegt eine Regelstange, die einen Ends mit der Regeleinrichtung, also bspw. der variablen Turbinengeometrie oder dem Waste-Gate-Ventil, und andererseits mit der Druckdose gekoppelt ist. Schwierigkeiten bereitet dabei stets das Einstellen bzw. Justieren dieser Druckdose relativ zur Ladeeinrichtung, damit ein entsprechendes Signal der Motorsteuerung auch richtig umgesetzt werden kann.

Aus der US 7,340,895 B2 ist ein Verfahren zum Justieren einer Druckdose an einer Ladeeinrichtung, insbesondere an einem Abgasturbolader, bekannt, bei welchem zunächst die Druckdose in einer vertikalen Position an der Ladeeinrichtung beweglich montiert wird. Eine Stellstange der Druckdose ist dabei mit einer Regeleinrichtung der Ladeeinrichtung, bspw. mit einer variablen Turbinengeometrie oder einem Waste-Gate-Ventil, verbunden. In der vertikalen Position wird nun die Druckdose mit einem vordefinierten Vakuum beaufschlagt, wobei die Druckdose aufgrund der Schwerkraft eine natürliche Stellung einnimmt. Durch den Unterdruck in der Druckdose wird die Stellstange mit einem Anschlag in Kontakt gebracht, wobei das Verstellen der Stellstange zugleich auch ein Verstellen der gesamten Druckdose nach sich zieht. In der nun eingenommenen Stellung wird die Druckdose an der Ladeeinrichtung, d. h. am Abgasturbolader, fixiert. Nachteilig ist hierbei jedoch, dass die

Druckdose/Steuerdose/Unterdruckdose stets vertikal an der Ladeeinrichtung montiert werden muss, um den zuvor beschriebenen Justiervorgang durchführen zu können. Zugleich lässt die mit diesem Verfahren erreichbare Genauigkeit zu wünschen übrig.

Die vorliegende Erfindung beschäftigt sich daher mit dem Problem, für ein Verfahren zum Justieren einer Druckdose/Unterdruckdose eine verbesserte Ausführungsform anzugeben, die sich insbesondere durch eine leichte Durchführbarkeit und eine hohe Einstellgenauigkeit auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, ein Verfahren zum Justieren einer Druckdose/Unterdruckdose zum Betätigen einer Regeleinrichtung, insbesondere einer variablen Turbinengeometrie oder eines Waste-Gate-Ventils, an einer Ladeeinrichtung so zu verfeinern, dass die Druckdose/Unterdruckdose zum Durchführen des Justierverfahrens keine vordefinierte Position an der Ladeeinrichtung einnehmen muss und dadurch das Verfahren leichter ausgeführt werden kann und zudem eine deutlich verbesserte Einstellgenauigkeit erreicht werden kann. Bei dem erfindungsgemäßen Verfahren wird dabei die Druckdose/Unterdruckdose über eine Stellstange mit der Regeleinrichtung gekoppelt und in beliebiger Position beweglich an der Ladeeinrichtung montiert. Anschließend wird ein frei wählbarer, d. h. nahezu beliebiger, Überdruck/Unterdruck an die Druckdose/Unterdruckdose angelegt, der die Stellstange mit einem Anschlag in Kontakt bringt. Nun wird die Druckdose/Unterdruckdose soweit verstellt, bspw. mittels einer extra hierfür vorgesehenen Stelleinrichtung, bis ein Sensor einen vordefinierten Wert, bspw. einen Stellweg der Stellstange, erfasst. Nach Erfassen des vordefinierten Wertes durch den Sensor kann die Druckdose/Unterdruckdose an der Ladeeinrichtung festgeschraubt, d. h. fixiert werden. Mit dem erfindungsgemäßen Verfahren, dass sich die Einstellung einen exakten Sensorwert zunutze macht, kann eine Genauigkeit von bis ± 0,029 mm erreicht werden, die somit nahezu doppelt so präzise ist, wie eine bekannte Einstellung auf einen angelegten Unterdruck/Überdruck, die lediglich eine Genauigkeit von ± 0,053 mm erreicht. Zudem weist das erfindungsgemäße Verfahren zum Justieren der Druckdose/Unterdruckdose an der Ladeeinrichtung den großen Vorteil auf, dass die Druckdose/Unterdruckdose in beliebiger Position beweglich an der Ladeeinrichtung montiert werden kann und nicht zuvor, d. h. vor Beginn des eigentlichen Justierverfahrens in eine vertikale Position gebracht werden muss. Das erfindungsgemäße Verfahren zeichnet sich somit durch eine deutlich verbesserte Genauigkeit der Einstellung und zugleich eine deutlich vereinfachte Durchführbarkeit aus. Zugleich ist man bei dem erfindungsgemäßen Verfahren nicht mehr auf die Schwerkraft zum Justieren der Druckdose/Unterdruckdose angewiesen.

Bei einer vorteilhaften Weiterbildung der erfindungsgemäßen Lösung, erfasst der Sensor einen Weg der Stellstange und ist zugleich in die Druckdose/Unterdruckdose integriert. Eine Integration des Sensors in die Druckdose/Unterdruckdose schützt diesen insbesondere vor äußeren Einflüssen, wodurch dessen Lebenserwartung deutlich gesteigert werden kann. Der Sensor, der beim erfindungsgemäßen Verfahren zum Justieren der Druckdose/Unterdruckdose an der Ladeeinrichtung genutzt wird, kann später selbstverständlich auch weitere Werte liefern, bspw. also Rückmeldung an eine Motorsteuerung.

Bei einer weiteren vorteilhaften Ausführungsform der erfindungsgemäßen Lösung, erfolgt ein Verstellen der Druckdose/Unterdruckdose über eine Stelleinrichtung, die zumindest einen Exzenter aufweist, der einerseits mit der Druckdose/Unterdruckdose und andererseits mit der Ladeeinrichtung verbunden ist. Die Druckdose/Unterdruckdose weist hierbei üblicherweise eine Halteeinrichtung, bspw. eine Metallkonsole, auf, über die die Druckdose/Unterdruckdose an der Ladeeinrichtung angebunden wird. Der Exzenter wird nun einerseits mit der Ladeeinrichtung und andererseits mit der Halteeinrichtung verbunden, wobei durch ein einfaches Verdrehen des Exzenters eine Relativbewegung der Halteeinrichtung und damit der Druckdose/Unterdruckdose zur Ladeeinrichtung erfolgt. Zugleich weist die Halteeinrichtung und die Ladeeinrichtung weitere Durchgangsöffnungen auf, durch welche beim Erreichen einer vordefinierten Endposition Schrauben gesteckt und damit die Druckdose/Unterdruckdose an der Ladeeinrichtung fixiert werden kann. Anstelle des Exzenters können selbstverständlich auch Langlöcher vorgesehen sein, wobei der Exzenter eine besonders exakte, da feine Einstellung ermöglicht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einzelne Verfahrensschritte eines erfindungsgemäßen Verfahrens zum Justieren einer Druckdose/Unterdruckdose an einer Ladeeinrichtung,
- Fig. 2: eine Ladeeinrichtung mit einer erfindungsgemäßen Stelleinrichtung,
- Fig. 3: einen Exzenter der Stelleinrichtung.

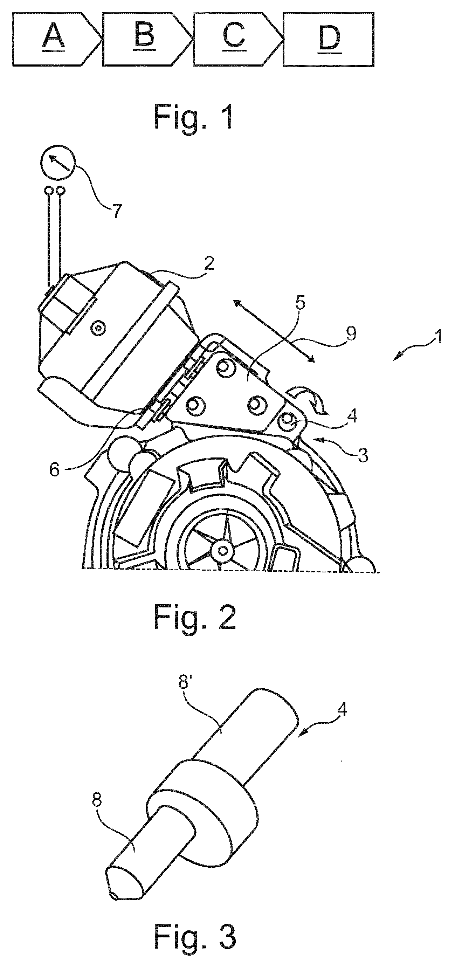

Entsprechend der Fig. 2, weist eine Ladeeinrichtung 1, die bspw. als Abgasturbolader ausgebildet sein kann, eine Druckdose/Unterdruckdose 2 zum Betätigen einer nicht näher gezeigten Regeleinrichtung, insbesondere zum Betätigen einer variablen Turbinengeometrie oder eine Waste-Gate-Ventils, der Ladeeinrichtung 1 auf. Zugleich ist eine Stelleinrichtung 3 zum Verstellen der Druckdose/Unterdruckdose 2 relativ zur Ladeeinrichtung 1 vorgesehen, die zumindest einen Exzenter 4 (vgl. Fig. 3) aufweist, der einerseits mit der Druckdose/Unterdruckdose 2 bzw. indirekt mit derselben über eine Halteeinrichtung 5, und andererseits mit der Ladeeinrichtung 1 verbunden ist. Die Druckdose/Unterdruckdose 2 ist dabei im gezeigten Ausführungsbeispiel über die Halteeinrichtung 5 an die Ladeeinrichtung 1, d. h. insbesondere an ein Gehäuse derselben, angebunden.

Um eine möglichst exakte Steuerung der Regeleinrichtung, d. h. beispielsweise des Waste-Gate-Ventils oder der variablen Turbinengeometrie erreichen zu können, muss die Druckdose/Unterdruckdose 2 entsprechend an der Ladeeinrichtung 1 justiert werden. Hierzu wird ein erfindungsgemäßes Verfahren zum Justieren der Druckdose/Unterdruckdose 2 zum Betätigen der Regeleinrichtung an der Ladeeinrichtung 1 vorgeschlagen, welches gemäß der Fig. 1 insgesamt vier Verfahrensschritte A bis D aufweist.

Das erfindungsgemäße Verfahren zum Justieren der Druckdose/Unterdruckdose 2 an der Ladeeinrichtung 1 erfolgt dabei wie folgt: Im Verfahrensschritt A wird zunächst die Druckdose/Unterdruckdose 2 über eine Stellstange 6 mit der Regeleinrichtung gekoppelt und in beliebiger Position beweglich an der Ladeeinrichtung 1 bzw. an einem Gehäuse derselben, montiert. Eine beliebige Position heißt in diesem Fall insbesondere, dass die Druckdose/Unterdruckdose 2 nicht wie bisher üblich, vertikal an der Ladeeinrichtung 1 positioniert werden muss. Im Verfahrensschritt B wird anschließend ein frei wählbarer Überdruck/Unterdruck an die Druckdose/Unterdruckdose 2 angelegt, der die Stellstange 6 mit einem nicht näher beschriebenen Anschlag in Kontakt bringt. Unter einem frei wählbaren wird dabei selbstverständlich lediglich ein derartiger Überdruck/Unterdruck verstanden, der die Stellstange 6 mit dem beschriebenen Anschlag in Kontakt bringt. Beliebig hohe Unterdrücke, insbesondere solche, die eine Zerstörung der Druckdose/Unterdruckdose 2 zur Folge hätten, sollen hierunter selbstverständlich nicht verstanden werden. Im Verfahrensschritt C wird nun die Druckdose/Unterdruckdose 2 soweit verstellt, bis ein Sensor 7 einen vordefinierten Wert erfasst. Der Sensor 7 ist gemäß der Fig. 2 außerhalb der Druckdose/Unterdruckdose 2 angeordnet, bei einer bevorzugten Ausführungsform jedoch auch in die Druckdose/Unterdruckdose 2 integriert und dadurch besonders geschützt angeordnet sein. Im abschließenden Verfahrensschritt D wird nun die Druckdose/Unterdruckdose 2 an der Ladeeinrichtung 1 fixiert, d. h. insbesondere festgeschraubt. Die Fixierung kann hierbei insbesondere durch ein Festschrauben der Halteeinrichtung 5 am Gehäuse der Ladeeinrichtung 1 erfolgen.

Generell kann der Sensor 7 einen Weg der Stellstange 6 erfassen, wodurch ein besonders exaktes Ausrichten der Druckdose/Unterdruckdose 2 relativ zur Ladeeinrichtung 1 bzw. relativ zur Regeleinrichtung möglich ist. Ein Verstellen der Druckdose/Unterdruckdose 2 im Verfahrensschritt C wird dabei über die bereits oben beschriebene Stelleinrichtung 3 bewirkt, die zumindest einen Exzenter 4 aufweist, der einerseits mit der Druckdose/Unterdruckdose 2 und andererseits mit der Ladeeinrichtung 1 verbunden ist. Genauer gesagt ist dabei der Exzenter 4 einerseits mit der Halteeinrichtung 5 der Druckdose/Unterdruckdose 2, bspw. einer Blechkonsole, und andererseits mit dem Gehäuse der Ladeeinrichtung 1, bspw. mit einem Turbinengehäuse, verbunden.

Gemäß der Fig. 3 ist dabei eine mögliche Ausführungsform des Exzenters 4 dargestellt, wobei aufgrund der Exzentrizität zumindest eines Pins 8,8' erkennbar ist, dass ein Verdrehen des Exzenters 4 um seine Längsachse nicht nur ein Verdrehen zumindest eines Pins 8,8' sondern zugleich auch ein Verschieben desselben bewirkt, wodurch wiederum die Verstellbewegung der Druckdose/Unterdruckdose 2 entlang der Stellrichtung 9 (vgl. Fig. 2) bewirkt werden kann. Mittels des erfindungsgemäßen Exzenters 4 ist dabei eine besonders exakte, da feine, Verstellung der Druckdose/Unterdruckdose 2 möglich.

Das erfindungsgemäße Verfahren weist dabei den großen Vorteil auf, dass es eine nahezu beliebige Anordnung der Druckdose/Unterdruckdose 2 an der Ladeeinrichtung 1 ermöglicht, sodass dies nicht zwingend vertikal angeordnet sein muss. Darüber hinaus erhöht sich durch das erfindungsgemäße Verfahren auch die Einstellgenauigkeit um nahezu das Doppelte, sodass der Einstell- bzw.

Justiervorgang nicht nur leichter, sondern zugleich auch deutlich exakter ausgeführt werden kann, was wiederum auf die Funktionsfähigkeit einen positiven Einfluss hat.

## Patentansprüche

1. Verfahren zum Justieren einer Druckdose/Unterdruckdose (2) zum Betätigen einer Regeleinrichtung, insbesondere einer variabel Turbinengeometrie oder eines Wastegateventils, an einer Ladeeinrichtung (1), insbesondere an einem Abgasturbolader, bei dem
- die Druckdose/Unterdruckdose (2) über eine Stellstange (6) mit der Regeleinrichtung gekoppelt und in beliebiger Position beweglich an der Ladeeinrichtung (1) montiert wird,
- ein frei wählbarer Überdruck/Unterdruck an die Druckdose/Unterdruckdose (2) angelegt wird, der die Stellstange (6) mit einem Anschlag in Kontakt bringt,
- die Druckdose/Unterdruckdose (2) relativ zur Ladeeinrichtung (1) soweit verstellt wird, bis ein Sensor (7) einen vordefinierten Wert erfasst,
- die Druckdose/Unterdruckdose (2) an der Ladeeinrichtung (1) fixiert wird.

2. Verfahren nach Anspruch 1,
**dadurch gekennzeichnet,**
**dass** der Sensor (7) einen Weg der Stellstange (6) erfasst und in die Druckdose/Unterdruckdose (2) integriert ist.

3. Verfahren nach Anspruch 1 oder 2,
**dadurch gekennzeichnet,**
**dass** ein Verstellen der Druckdose/Unterdruckdose (2) über eine Stelleinrichtung (3) erfolgt, die zumindest einen Exzenter (4) aufweist, der einerseits mit der Druckdose/Unterdruckdose (2) und andererseits mit der Ladeeinrichtung (1) verbunden ist.

4. Verfahren nach Anspruch 3,
**dadurch gekennzeichnet,**
**dass** ein Verdrehen des Exzenters (4) ein Verstellen der Druckdose/Unterdruckdose (2) relativ zur Ladeeinrichtung (1) bewirkt.

## Claims

1. Method for adjusting a pressure unit/vacuum unit (2) for operating a control device, in particular a variable turbine geometry or a wastegate valve, on a charging device (1), in particular on an exhaust gas turbocharger, in which
- the pressure unit/vacuum unit (2) is coupled to the control device via an adjusting lever (6) and is assembled on the charging device (1) to be moveable in any position,
- a freely selectable excess pressure/vacuum is applied to the pressure unit/vacuum unit (2), which brings the adjusting lever (6) into contact with a stop,
- the pressure unit/vacuum unit (2) is adjusted relative to the charging device (1) until a sensor (7) detects a predefined value,
- the pressure unit/vacuum unit (2) is fixed to the charging device (1).

2. Method according to Claim 1,
**characterised in that**
the sensor (7) detects a path of the adjusting lever (6) and is integrated into the pressure unit/ vacuum unit (2).

3. Method according to Claim 1 or 2,
**characterised in that**
an adjusting of the pressure unit/vacuum unit (2) occurs via an adjusting device (3) which has at least one cam (4) which is connected on the one hand to the pressure unit/vacuum unit (2) and on the other hand to the charging device (1).

4. Method according to Claim 3,
**characterised in that**
a rotating of the cam (4) causes an adjusting of the pressure unit/vacuum unit (2) relative to the charging device (1).

## Revendications

1. Procédé pour ajuster une capsule sous pression/une capsule à dépression (2) pour actionner un dispositif de régulation, en particulier une géométrie de turbine variable ou une soupape de décharge, au niveau d'un dispositif de charge (1), en particulier au niveau d'un turbocompresseur à gaz d'échappement, dans lequel
- la capsule sous pression/la capsule à dépression (2) est couplée au dispositif de régulation par l'intermédiaire d'une barre de réglage (6) et est montée de manière mobile au niveau du dispositif de charge (1) dans une position quelconque,
- une surpression/une dépression pouvant être sélectionnée librement est appliquée au niveau de la capsule sous pression/de la capsule à dépression (2), laquelle met en contact la barre de réglage (6) avec une butée,
- la capsule sous pression/la capsule à dépression (2) est déplacée par rapport au dispositif de charge (1) jusqu'à ce qu'un capteur (7) détecte une valeur prédéfinie,
- la capsule sous pression/la capsule à dépression (2) est fixée au niveau du dispositif de charge (1).

2. Procédé selon la revendication 1,
**caractérisé en ce**
**que** le capteur (7) détecte un trajet de la barre de réglage (6) et est intégré dans la capsule sous pression/la capsule à dépression (2).

3. Procédé selon la revendication 1 ou 2,
**caractérisé en ce**
**qu'**un déplacement de la capsule sous pression/de la capsule à dépression (2) est effectué par l'intermédiaire d'un dispositif de réglage (3), qui présente au moins un excentrique (4), qui est relié d'une part à la capsule sous pression/la capsule à dépression (2) et d'autre part au dispositif de charge (1).

4. Procédé selon la revendication 3,
**caractérisé en ce**
**qu'**une rotation de l'excentrique (4) provoque un déplacement de la capsule sous pression/de la capsule à dépression (2) par rapport au dispositif de charge (1).
